# EUROPÄISCHE PATENTSCHRIFT

(11) **EP 3 781 370 B1**
(45) Veröffentlichungstag und Bekanntmachung des Hinweises auf die Patenterteilung: **24.09.2025**
(21) Anmeldenummer: 19718303.1
(22) Anmeldetag: 12.04.2019
(51) Int. Cl.: B25J 19/00, B25J 19/06, B25J 13/08

(54) **ROBOTERSYSTEM UND VERFAHREN ZUM BETREIBEN DES ROBOTERSYSTEMS**
ROBOT SYSTEM AND METHOD FOR OPERATING THE ROBOT SYSTEM
SYSTÈME ROBOTISÉ ET PROCÉDÉ PERMETTANT DE FAIRE FONCTIONNER LE SYSTÈME ROBOTISÉ

(30) Priorität: 19.04.2018 DE 102018206019
(43) Veröffentlichungstag der Anmeldung: 24.02.2021
(73) Patentinhaber: KUKA Deutschland GmbH, 86165 Augsburg (DE)
(72) Erfinder: RIEDEL, Martin, 86165 Augsburg (DE); SCHOBER, Wolfgang, 86554 Pöttmes (DE); TSCHARNUTER, Dietmar, 86316 Friedberg (DE); ZASCHE, Moritz, 87653 Eggenthal (DE); REEKERS, Andre, 86163 Augsburg (DE); TORRES, Jorge, 86356 Neusäß (DE)
(74) Vertreter: Oelke, Jochen
(86) Internationale Anmeldenummer: PCT/EP2019/059370
(87) Internationale Veröffentlichungsnummer: WO 2019/201758

(56) Entgegenhaltungen:
- EP-A1- 3 246 136
- DE-A1- 102008 059 505
- DE-A1- 19 956 176

## Beschreibung

Die vorliegende Erfindung betrifft ein Robotersystem gemäß dem Oberbegriff des Anspruchs 1, sowie und ein Verfahren zum Betreiben
des Robotersystems.

Die Druckschrift EP3246136 A1 offenbart ein solches Robotersystem und ein solches Verfahren.

Aufgabe der vorliegenden Erfindung ist es, ein Robotersystem und/oder dessen Betrieb zu verbessern. Diese Aufgabe wird durch ein Robotersystem mit den Merkmalen des Anspruchs 1 gelöst. Anspruch 14 stellt ein Verfahren zum Betreiben eines hier beschriebenen Robotersystems unter Schutz. Die Unteransprüche betreffen vorteilhafte Weiterbildungen.

Gemäß eines Aspekts weist ein Robotersystem, insbesondere ein Roboter, ein oder mehrere Roboterstrukturglieder auf, das bzw. die (jeweils) zwei benachbarte Robotergelenke tragend bzw. strukturell miteinander verbinden, in einer Ausführung Komponenten eines oder beider Gelenke, insbesondere Gehäuse, Wellen, Lager oder dergleichen, aufweisen. Zusätzlich oder alternativ weist das Robotersystem in einer Ausführung eine Basis und/oder ein Roboterwerkzeug und/oder Roboter-bzw. Werkzeugflansch auf, die (jeweils) ein (proximales bzw. distales) Robotergelenk und eine diesem benachbarte Roboterbefestigungsfläche oder Roboterarbeitsfläche tragend bzw. strukturell miteinander verbindet, in einer Ausführung Komponenten des Gelenks, insbesondere ein Gehäuse, eine Welle, ein Lager oder dergleichen, und/oder die Roboterbefestigungs- oder -arbeitsfläche aufweisen, und daher vorliegend ebenfalls als Roboterstrukturglied im Sinne der vorliegenden Erfindung bezeichnet wird/werden. Vorzugsweise weist das Robotersystem bzw. der Roboter, insbesondere elektrische, in einer Ausführung elektromotorische, Antriebe zum Verstellen bzw. Bewegen eines oder mehrerer der Gelenke auf.

Nach einer Ausführung der vorliegenden Erfindung weist ein Robotersystem für das bzw. eines oder mehrere der Roboterstrukturglieder (jeweils) eine ein- oder mehrteilige erste strukturgliedfeste Außenschale auf, die das (jeweilige) Roboterstrukturglieder vollständig oder teilweise, in einer Ausführung zu wenigstens 25%, insbesondere wenigstens 50%, in einer Ausführung wenigstens 75%, abdeckt, insbesondere vollständig oder teilweise umgreift, insbesondere umschließt, bzw. hierzu eingerichtet ist bzw. verwendet wird. In einer Weiterbildung deckt die erste strukturgliedfeste Außenschale auch ein oder beide Gelenke, in denen das (jeweilige) Roboterstrukturglieder angelenkt bzw. angebunden ist, vollständig oder teilweise, in einer Ausführung zu wenigstens 25%, insbesondere wenigstens 50%, in einer Ausführung wenigstens 75%, ab, sie kann das (jeweilige) Gelenke insbesondere vollständig oder teilweise umgreifen, insbesondere umschließen, bzw. hierzu eingerichtet sein bzw. verwendet werden. In einer (anderen) Weiterbildung lässt die erste strukturgliedfeste Außenschale ein oder beide Gelenke, in denen das (jeweilige) Roboterstrukturglieder angelenkt bzw. -bunden ist, vollständig oder teilweise frei bzw. ist hierzu eingerichtet bzw. wird hierzu verwendet.

In einer Ausführung weist das Robotersystem eine oder mehrere weitere ein- oder mehrteilige Außenschalen auf. In einer Weiterbildung deckt/decken die bzw. eine oder mehrere der weiteren Außenschalen das (jeweilige) Roboterstrukturglieder zusammen mit der ersten Außenschale vollständig oder teilweise, in einer Ausführung zu wenigstens 25%, insbesondere wenigstens 50%, in einer Ausführung wenigstens 75%, ab bzw. ist/sind hierzu eingerichtet bzw. wird/werden hierzu verwendet. In einer anderen Weiterbildung deckt/decken die bzw. eine oder mehrere der weiteren Außenschalen das (jeweilige) Roboterstrukturglieder anstelle der ersten Außenschale vollständig oder teilweise, in einer Ausführung zu wenigstens 25%, insbesondere wenigstens 50%, in einer Ausführung wenigstens 75%, ab bzw. ist/sind hierzu eingerichtet bzw. wird/werden hierzu verwendet. In einer Ausführung deckt/decken die bzw. eine oder mehrere der weiteren Außenschalen (zusammen mit oder anstelle der ersten Außenschale) auch ein oder beide Gelenke, in denen das (jeweilige) Roboterstrukturglieder angelenkt bzw. -bunden ist, vollständig oder teilweise, in einer Ausführung zu wenigstens 25%, insbesondere wenigstens 50%, in einer Ausführung wenigstens 75%, ab, sie kann/können das (jeweilige) Gelenke insbesondere vollständig oder teilweise umgreifen, insbesondere umschließen, bzw. hierzu eingerichtet sein bzw. verwendet werden. In einer (anderen) Ausführung lässt/lassen die bzw. eine oder mehrere der weiteren Außenschalen ein oder beide Gelenke, in denen das (jeweilige) Roboterstrukturglieder angelenkt bzw. -bunden ist, vollständig oder teilweise frei bzw. ist/sind hierzu eingerichtet bzw. wird/werden hierzu verwendet.

In einer Ausführung wird bzw. ist die erste Außenschale, insbesondere zerstörungsfrei lösbar, in einer Ausführung reibschlüssig und/oder formschlüssig, an dem (jeweiligen bzw. zugeordneten) Roboterstrukturglied oder einer weiteren Außenschale befestigt, insbesondere mittels Schraub-, Steck-, Spreiz- und/oder Schnappverbindung.

In der einen Weiterbildung wird/werden bzw. ist/sind die bzw. eine oder mehrere der weiteren Außenschalen, insbesondere zerstörungsfrei lösbar, in einer Ausführung reibschlüssig und/oder formschlüssig, an dem (jeweiligen bzw. zugeordneten) Roboterstrukturglied und/oder der daran befestigten ersten Außenschale befestigt, insbesondere mittels Schraub-, Steck-, Spreiz- und/oder Schnappverbindung.

In der anderen Weiterbildung wird/werden bzw. ist/sind die bzw. eine oder mehrere der weiteren Außenschalen, insbesondere zerstörungsfrei lösbar, in einer Ausführung reibschlüssig und/oder formschlüssig, anstelle der ersten Außenschale an der- bzw. denselben oder anderen Schnittstelle(n) des (jeweiligen bzw. zugeordneten) Roboterstrukturgliedes befestigt, insbesondere mittels Schraub-, Steck-, Spreiz- und/oder Schnappverbindung. Mit anderen Worten können in einer Ausführung für das gleiche Glied wahlweise verschiedene, insbesondere in Farbe, Form, Material und/oder Funktion verschiedenartige, Außenschalen verwendet werden, so dass das baukastenartig die Austausch- bzw. Erweiterbarkeit des Robotersystems verbessert wird. Insbesondere können zwei oder mehrere Außenschalen einem Roboterstrukturglied zugeordnet sein, wobei jede der Außenschalen an dem zugeordneten Roboterstrukturglied und/oder an einer der anderen Außenschalen befestigt sein kann. Besonders bevorzugt können die die zwei oder mehrere Außenschalen zumindest bereichsweise zueinander formkongruent ausgebildet sein, insbesondere um in einem an dem zugeordneten Roboterstrukturglied angeordneten bzw. befestigten Zustand im Wesentlichen spaltfrei miteinander mechanisch zu kontaktieren.

In einer Ausführung weist/weisen die bzw. eine oder mehrere der weiteren Außenschalen eine von der ersten Außenschale wenigstens teilweise verschiedene Geometrie, Oberfläche, insbesondere Farbe, Haptik und/oder Steifigkeit, Teilezahl und/oder Funktionalität auf und/oder ist/sind wenigstens teilweise aus von der ersten Außenschale verschiedenem Werkstoff gefertigt.

Somit wird in einer Ausführung ein modulares Baukastensystem vorgeschlagen, bei dem wahlweise bzw. alternativ, insbesondere für verschiedene Einsatzbereiche, unterschiedliche Außenschalen an dem (jeweiligen) Roboterstrukturglieder angeordnet bzw. verwendet werden und das Robotersystem so vorteilhaft an unterschiedliche Anforderungen angepasst werden kann. In einer anderen Ausführung können, insbesondere beschädigte, Außenschalen vorteilhaft durch baugleiche Außenschalen ersetzt werden. Vorteilhafterweise sind die Außenschalen zerstörungsfrei austauschbar, so dass das Robotersystem durch einen Wechsel bzw. Austausch der Außenschalen an eine veränderte Anforderung anpassbar ist.

In einer Ausführung überträgt das Roboterstrukturglied (jeweils) Lasten in sechs Freiheitsgraden, insbesondere also Zug-Druckkräfte, Biege- und Torsionsmomente, und/oder wenigstens 75%, insbesondere wenigstens 90%, in einer Ausführung wenigstens 98% aller Lasten zwischen den beiden Robotergelenken bzw. dem Robotergelenk und der Roboterbefestigungs- bzw. -arbeitsfläche, die es verbindet, bzw. ist hierzu eingerichtet bzw. wird hierzu verwendet ("tragende Verbindung").

In einer Ausführung weist es hierzu wenigstens abschnittsweise einen offenen Profilquerschnitt, insbesondere ein U-, T- oder Doppel-T-Profil oder dergleichen, und/oder wenigstens abschnittsweise einen Vollquerschnitt auf und/oder ist aus Metall und/oder mittels Urformen, insbesondere Gießen, Strangpressen oder dergleichen, gefertigt. Hierdurch können in einer Ausführung Lasten besonders vorteilhaft übertragen werden.

In einer Ausführung ist/sind bzw. wird/werden das bzw. eines oder mehrere der Roboterstrukturglieder (jeweils) mit einer oder mehreren elektrischen, insbesondere elektronischen, pneumatischen und/oder hydraulischen Komponenten und/oder Leitungen bestückt, die ebenfalls von der ersten strukturgliedfesten Außenschale wenigstens teilweise abgedeckt und/oder vor deren Befestigung an dem Roboterstrukturglieder montiert werden.

Entsprechend überträgt in einer Ausführung die erste und/oder wenigstens eine weitere Außenschale höchstens 25%, insbesondere höchstens 10%, in einer Ausführung höchstens 2%, aller Lasten zwischen den beiden Robotergelenken bzw. dem Robotergelenk und der Roboterbefestigungs- bzw. -arbeitsfläche, die das (jeweilige) Roboterstrukturglieder, verbindet, bzw. ist nichttragend bzw. hierzu eingerichtet bzw. wird hierzu verwendet.

Somit wird in einer Ausführung eine Funktionstrennung zwischen einer kinematischen bzw. Strukturfunktion(alität), die das Strukturglied übernimmt, und einer oder mehreren Zusatzfunktion(alität)en, die die Außenschale wenigstens teilweise übernimmt, insbesondere verschiedenen Zusatzfunktion(alität)en, die die alternativ verwendeten Außenschalen übernehmen, vorgeschlagen. Dadurch können in einer Ausführung Strukturglied und/oder Außenschale(n) jeweils vorteilhaft an ihre jeweilige (Haupt)Funktion(alität) angepasst werden.

In einer Ausführung weist/weisen die erste und/oder wenigstens eine weitere Außenschale (jeweils) wenigstens zwei Außenschalenteile auf, die zerstörungsfrei lösbar miteinander verbunden werden bzw. sind, in einer Ausführung reib- und/oder formschlüssig, insbesondere mittels Schraub-, Steck-, Spreiz- und/oder Schnappverbindung.

In einer Ausführung wird wenigstens eine Außenschale, die das Roboterstrukturglied aktuell wenigstens teilweise abdeckt, insbesondere daran befestigt ist, erfasst, insbesondere identifiziert, und in einer Weiterbildung in Abhängigkeit von einer bzw. der erfassten bzw. identifizierten Außenschale ein Betriebsmodus, insbesondere Fahrbetrieb, freigegeben und/oder zwischen verschiedenen Betriebsmodi, insbesondere des Roboters, umgeschaltet. Entsprechend weist das Robotersystem, insbesondere das bzw. eines oder mehrere der Strukturglieder und/oder die (jeweilige) Außenschale, in einer Ausführung Mittel zum Erfassen, insbesondere Identifizieren, wenigstens einer Außenschale, die das Roboterstrukturglied aktuell wenigstens teilweise abdeckt, insbesondere daran befestigt ist, und in einer Weiterbildung zum Freigeben eines Betriebs(modus) und/oder Umschalten zwischen verschiedenen Betriebsmodi, insbesondere des Roboters, in Abhängigkeit von der erfassten Außenschale, auf.

Die Erfassung kann in einer Ausführung mechanisch, insbesondere mithilfe eines oder mehrerer Kodierstifte, Taster oder dergleichen, insbesondere nach dem Schlüssel-Schloss-Prinzip, elektrisch und/oder magnetisch, insbesondere elektromagnetisch, in einer Ausführung mithilfe RFID ("radio-frequency identification"), NFC ("Near Field Communication") oder dergleichen, oder optisch, insbesondere mithilfe einer Bild-, insbesondere QR-Code-Auswertung erfolgen. Entsprechend weist bzw. weisen in einer Ausführung die erste und/oder wenigstens eine weitere Außenschale, in einer Ausführung unterschiedliche, Identifikationsmerkmale, beispielsweise RFID-Transponder, Kodierstifte, QR-Codes oder dergleichen auf, die von entsprechenden Sensoren am Roboterstrukturglied erfasst werden.

Hierdurch kann in einer Ausführung ein Roboterbetrieb an das Vorhandensein (irgend)einer Außenschale oder einer bestimmten Außenschale(nsorte) angepasst werden. So kann in einer Ausführung eine Bewegungsfreigabe, eine, insbesondere maximal zulässige, Geschwindigkeit, Reichweite und/oder aufbringbare Kraft, eine Kühlung, ein Mensch-Roboter-Kooperations- und/oder ein Voll-Automatik-Betrieb oder dergleichen an das (Erfassen des) Vorhandensein(s) (irgend)einer Außenschale oder einer bestimmten Außenschale(nsorte) gekoppelt sein bzw. werden bzw. hiervon abhängen.

In einer Ausführung wird in einen Betriebsmodus umgeschaltet bzw. ein Betrieb freigegeben, wenn das Vorhandensein irgendeiner Außenschale erfasst wird, und in einen weiteren Betriebsmodus umgeschaltet bzw. ein Betrieb, insbesondere Fahrbetrieb, nicht freigegeben, wenn bzw. solange das Nicht-Vorhandensein irgendeiner Außenschale bzw. das Fehlen jeglicher Außenschale erfasst wird.

In einer Ausführung wird in einen Betriebsmodus umgeschaltet, wenn das Vorhandensein der ersten Außenschale erfasst wird, und in einen weiteren Betriebsmodus umgeschaltet, wenn das Vorhandensein einer hiervon verschieden(artig)en weiteren Außenschale erfasst wird.

Dadurch kann in einer Ausführung der Roboterbetrieb vorteilhaft an die jeweils vorhandene(n) Außenschale(n) angepasst und so insbesondere eine Betriebssicherheit verbessert werden.

Erfindungsgemäß ist ein ein- oder mehrteiliges Siegel vorgesehen, das durch Entfernen der (ersten) Außenschale beschädigt, insbesondere zerstört, wird. Mit anderen Worten ist ein Entfernen der (ersten) Außenschale nur unter Beschädigung, insbesondere Zerstörung, des Siegels möglich.

Dadurch kann eine unerlaubte Manipulation bzw. ein Missbrauch erkannt und so insbesondere eine Betriebssicherheit verbessert werden.

In einer Ausführung weist/weisen die erste und/oder wenigstens eine weitere Außenschale (jeweils) wenigstens ein aktives Sicherheitsmittel zur Reduzierung einer Kollisionsbelastung und/oder wenigstens ein passives Sicherheitsmittel zur Reduzierung einer Kollisionsbelastung auf. In einer Ausführung wird wenigstens ein außenschalenseitiges Sicherheitsmittel zur Reduzierung einer Kollisionsbelastung aktiviert, falls eine Kollision prognostiziert und/oder erfasst wird.

Ein passives Sicherheitsmittel weist in einer Ausführung eine dämpfende, insbesondere energie- bzw. stoßabsorbierende Materialschicht, insbesondere einen Zellstoff, eine Waben- oder Federstruktur oder dergleichen, auf. In einer Ausführung ist ein passives Sicherheitsmittel, insbesondere eine stoßabsorbierende Materialschicht, dazu vorgesehen bzw. eingerichtet, sich elastisch und/oder plastisch bzw. wenigstens teilweise reversibel und/oder wenigstens teilweise nicht reversibel zu verformen, bzw. wird hierzu verwendet.

Ein aktives Sicherheitsmittel weist in einer Ausführung eine Kontaktfläche auf, die durch einen außenschalen- oder strukturgliedfesten Aktuator verstellt, insbesondere ausgefahren und/oder entfaltet, wird, insbesondere, falls ein außenschalen- oder strukturgliedfester Sensor oder ein von dem Roboterstrukturglied und der Außenschale beabstandeter, insbesondere an einem anderen Roboterstrukturglied oder einer anderen Außenschale oder auch von dem Roboter beabstandeter Sensor eine Kollision prognostiziert oder erfasst, bzw. ist das Sicherheitsmittel, insbesondere die Kontaktfläche, der Aktuator und/oder Sensor, hierzu vorgesehen, insbesondere eingerichtet, bzw. wird hierzu verwendet.

In einer Ausführung weist das aktive Sicherheitsmittel einen Airbag auf. Zusätzlich oder alternativ kann in einer Ausführung die jeweilige Außenschale durch einen außenschalen- oder strukturgliedfesten Aktuator komplett oder lokal, insbesondere segmentweise, von dem Roboterstrukturglied weg bzw. ausgefahren werden bzw. Außenschale und Aktuator hierzu eingerichtet sein bzw. verwendet werden. Dabei kann der Aktuator in einer Ausführung die Außenschale bzw. deren lokalen Bereich aktiv ausfahren und/oder eine Sperre einer Federeinrichtung lösen, die die Außenschale bzw. deren lokalen Bereich vorspannt. Dadurch kann in einer Ausführung eine Betriebssicherheit verbessert werden, insbesondere in Verbindung mit einem Umschalten zwischen Betriebsmodi in Abhängigkeit davon, ob die erfasste Außenschale ein entsprechendes Sicherheitsmittel aufweist bzw. welches Sicherheitsmittel die erfasste Außenschale aufweist.

In einer Ausführung weist/weisen die erste und/oder wenigstens eine weitere Außenschale (jeweils) wenigstens ein Schutzmittel zur, insbesondere elektrischen und/oder elektromagnetischen Abschirmung, insbesondere Abschirmung elektromagnetischer, insbesondere Funk-Wellen, und/oder zur, insbesondere wasser-, öl- und/oder luftdichten und/oder sterilen bzw. keimdichten Abdichtung eines strukturgliedseitigen Innenraums auf, in einer Ausführung dichtet die Außenschale den strukturgliedseitigen Innenraum, insbesondere wasser-, öl- und/oder luftdicht und/oder steril und/oder zur Gewährleistung eines IP-Schutzes, ab bzw. ist hierzu eingerichtet bzw. wird hierzu verwendet. Eine Abschirmung eines strukturgliedseitigen Innenraums kann gleichermaßen dem Schutz des Innenraums, insbesondere elektr(on)ischer Komponenten im Innenraum, wie auch des Außenraums dienen.

Zusätzlich oder alternativ kann in einer Ausführung die erste und/oder wenigstens eine weitere Außenschale (jeweils) als sterile Einwegschale ausgeführt bzw. nur einmalig verwendet und nach Gebrauch entsorgt werden. Gleichermaßen kann in einer Ausführung die erste und/oder wenigstens eine weitere Außenschale (jeweils) vor (wiederholtem) Gebrauch sterilisiert bzw. mehrfach verwendet werden. Zweckmäßigerweise können die Außenschalen sterilisierbar ausgebildet sein, um beispielsweise durch Autoklavieren, Plasmabehandlung, chemische Sterilisations- bzw. Desinfektionsmittel bzw. Gammastrahlung sterilisiert zu werden. Dadurch kann in einer Ausführung eine Betriebssicherheit verbessert werden, insbesondere in Verbindung mit einem Umschalten zwischen Betriebsmodi in Abhängigkeit davon, ob die erfasste Außenschale steril ist bzw. nach Gebrauch ausgetauscht wurde.

Zusätzlich oder alternativ wird/werden bzw. ist/sind in einer Ausführung die Außenschale(n), die ein oder mehrere Roboterstrukturglieder des Roboter(system)s abdecken, insbesondere daran angeordnet, insbesondere befestigt, sind, außenseitig durch eine ein- oder mehrteilige, insbesondere wasser-, öl- und/oder luftdichte und/oder sterile Schutzhülle umhüllt, die an der bzw. einer oder mehreren der Außenschale(n) befestigt sein bzw. werden kann.

In einer Ausführung wird ein strukturgliedseitiger Innenraum der ersten und/oder wenigstens einen weiteren Außenschale (jeweils) mithilfe eines außenschalenseitigen Thermomittels temperiert. Entsprechend weist/weisen die erste und/oder wenigstens eine weitere Außenschale in einer Ausführung (jeweils) wenigstens ein aktives und/oder wenigstens ein passives Thermomittel zur Temperierung und/oder thermischen Isolation eines strukturgliedseitigen Innenraums auf.

Ein passives Thermomittel weist in einer Ausführung eine Materialschicht mit einer Wärmeleitfähigkeit von höchstens 0,5 W/(mK), insbesondere höchstens 0,1 W/(mK), bei 20°C und/oder einen Emissionsgrad ε von wenigstens 0,7 und/oder mehrere Kühlkanäle und/oder Durchgangsöffnungen an der Außenschale auf.

Ein aktives Thermomittel weist in einer Ausführung ein, insbesondere elektrisches, Heizelement, einen Wärmetauscher, einen Lüfter, verstellbare Durchgangsöffnungen an der Außenschale, einen Aktuator zum Öffnen bzw. Schließen von Kühlkanälen und/oder Durchgangsöffnungen an der Außenschale und/oder eine Außenschalenfläche auf, die durch einen außenschalen- oder strukturgliedfesten Aktuator verstellt, insbesondere ausgefahren wird bzw. werden kann.

Hierdurch kann in einer Ausführung, insbesondere je nach Betriebszustand bzw. Antriebslast, Wärme abgeführt und so eine Aufheizung, insbesondere Überhitzung, von Komponenten vermieden und dadurch der Betrieb, insbesondere ein Wirkungsgrad, eine Prozessgeschwindigkeit und/oder eine Betriebssicherheit verbessert werden.

Wie vorstehend mit Bezug auf aktive Sicherheits- und Thermomittel ausgeführt, kann es vorteilhaft sein, eine Außenschale, die das jeweilige Roboterstrukturglied wenigstens teilweise abdeckt, zu verstellen, insbesondere als Ganzes oder vorzugsweise in Teilen, insbesondere zwei oder mehr Teile der mehrteiligen Außenschale gegeneinander zu verstellen. Auf diese Weise können in einer Ausführung bedarfsweise Spalte zur Kühlung geöffnet bzw. vergrößert und/oder eine Kontaktfläche zum frühzeitigen Abfangen bzw. Vergrößern einer Knautsch- bzw. Crashzone bei erfasster bzw. prognostizierter Kollision ausgefahren werden.

Insbesondere hierzu wird in einer Ausführung wenigstens ein Teil einer das Roboterstrukturglied wenigstens teilweise abdeckenden strukturgliedfesten Außenschale mithilfe wenigstens eines strukturglied- oder außenschalenfesten Aktuators, insbesondere gegenüber bzw. relativ dem zu Roboterstrukturglied, verstellt, insbesondere verschoben und/oder -schwenkt, insbesondere wenigstens zwei Teile der Außenschale gegeneinander. Entsprechend weist in einer Ausführung das Robotersystem wenigstens einen strukturglied- oder außenschalenfesten Aktuator zum Verstellen, insbesondere Verschieben und/oder -schwenken, wenigstens eines Teils einer das Roboterstrukturglied wenigstens teilweise abdeckenden strukturgliedfesten Außenschale, insbesondere gegenüber bzw. relativ zu dem Roboterstrukturglied, auf, insbesondere zum Verstellen wenigstens zweier Teile der Außenschale gegeneinander. Dabei kann eine solche Verstellung außer bei Kollisionen und/oder zur Temperierung auch für andere Zwecke eingesetzt werden, beispielsweise, um eine Außenkontur bedarfsweise zu verkleinern oder dergleichen.

In einer Ausführung ist/sind bzw. wird/werden eine oder mehrere Zusatzkomponenten, insbesondere Leitungen, Sensoren und/oder Aktuatoren, (jeweils) an einer, insbesondere strukturgliedzugewandten bzw. innenseitigen oder strukturgliedabgewandten bzw. außenseitigen, Schnittstelle der ersten und/oder wenigstens einen weiteren Außenschale befestigt, insbesondere zerstörungsfrei lösbar, in einer Ausführung form- und/oder reibschlüssig. Entsprechend weist/weisen in einer Ausführung die erste und/oder wenigstens eine weitere Außenschale (jeweils) eine oder mehrere, insbesondere strukturgliedzugewandte bzw. innenseitige und/oder strukturgliedabgewandte bzw. außenseitige, Schnittstellen, beispielsweise Anschraubpunkte, insbesondere Gewinde, Clipse, Schellen, Halter oder dergleichen, auf, an denen Zusatzkomponenten, insbesondere zerstörungsfrei lösbar, in einer Ausführung form- und/oder reibschlüssig, befestigt sind bzw. werden bzw. die hierzu vorgesehen, insbesondere eingerichtet sind bzw. verwendet werden. Hierdurch kann in einer Ausführung die Außenschale an unterschiedliche Einsatzbedingungen angepasst und so flexibler eingesetzt werden.

In einer Ausführung weist/weisen die erste und/oder wenigstens eine weitere Außenschale (jeweils) wenigstens eine elektrische und/oder wenigstens eine Fluidleitung auf. Diese ist in einer Weiterbildung fest bzw. dauerhaft, insbesondere stoffschlüssig, mit der Außenschale verbunden, in die Außenschale integriert oder zerstörungsfrei lösbar, in einer Ausführung form- und/oder reibschlüssig, an der Außenschale befestigt. In einer Ausführung ist die Leitung auf einer strukturgliedzugewandten Innenseite oder einer strukturgliedabgewandten Außenseite der Außenschale angeordnet. Hierdurch können Leitungen vorteilhaft, insbesondere bedarfsweise, montiert werden.

In einer Ausführung werden Informationen mithilfe eines außenschalenseitigen Ein- und/oder Ausgabemittels ein- bzw. ausgeben, insbesondere manuell bzw. optisch und/oder akustisch. Entsprechend weist/weisen die erste und/oder wenigstens eine weitere Außenschale (jeweils) wenigstens ein Ein- und/oder Ausgabemittel zum, insbesondere manuellen, Eingeben bzw., insbesondere optischen und/oder akustischen, Ausgeben von Informationen auf. Dieses kann fest bzw. dauerhaft, insbesondere stoffschlüssig, mit der Außenschale verbunden, in die Außenschale integriert oder zerstörungsfrei lösbar, in einer Ausführung form- und/oder reibschlüssig, an der Außenschale befestigt sein bzw. werden.

In einer Weiterbildung kann das Ausgabemittel einen oder mehrere punkt- oder linienförmige oder flächige ansteuerbare Lichtelemente, insbesondere LCD-, TFT-, OLED-Displays, RGB-LED-Bänder, RGB-LEDs oder dergleichen aufweisen und/oder einen Status, ein gewähltes Programm, einen Programmfortschritt, eine Geschwindigkeit des Roboters oder dergleichen anzeigen. Das Eingabemittel kann in einer Weiterbildung einen Taster, Schalter, ein Jogwheel, eine kapazitive und/oder drucksensitive Touchoberfläche oder dergleichen aufweisen. Hierdurch können in einer Ausführung je nach Einsatzbedingung durch die Verwendung verschiedener Außenschalen unterschiedliche Ein- bzw. Ausgabemöglichkeiten vorgesehen und das Robotersystem so flexibler eingesetzt werden.

In einer Ausführung wird eine Umgebung, insbesondere ein Umfeld, mithilfe wenigstens eines außenschalenseitigen Sensors, in einer Ausführung optisch bzw. visuell, erfasst. Entsprechend weist/weisen in einer Ausführung die erste und/oder wenigstens eine weitere Außenschale (jeweils) wenigstens einen Sensor zur Umgebungs-, insbesondere Umfelderfassung auf. Hierdurch kann in einer Ausführung ein hier erläutertes Sicherheitsmittel aktiviert, insbesondere ein hier erläuterter strukturglied- oder außenschalenfester Aktuator aktiviert werden.

In einer Ausführung weist/weisen die erste und/oder wenigstens eine weitere Außenschale (jeweils) wenigstens einen aktiven und/oder wenigstens einen passiven Fehlgebrauchsindikator auf, insbesondere einen Temperatur-, Feuchte- und/oder Beschleunigungssensor zum Erfassen eines Betriebs bei einer unzulässigen Temperatur und/oder Feuchte und/oder von unzulässig starken Stößen und/oder einen Speicher zum Abspeichern hiervon, einen energieabsorbierenden Hartschaum, eine passive drucksensitive Folie oder dergleichen zum Erfassen von Kontakten, oder dergleichen. Hierdurch kann ein Fehlgebrauch festgestellt und dadurch in einer Ausführung eine Betriebssicherheit verbessert werden.

Insbesondere, wenn eine Außenschale eine oder mehrere elektrische, pneumatische und/oder hydraulische Komponenten, insbesondere Aktuatoren, Ein- und/oder Ausgabemittel, Sensoren, Anschlüsse, Leitungen oder dergleichen aufweist, welche in einer Ausführung (jeweils) zerstörungsfrei lösbar, insbesondere reib- und/oder formschlüssig, oder nicht zerstörungsfrei lösbar, insbesondere stoffschlüssig, an der Außenschale befestigt, insbesondere in diese integriert sein können, weisen in einer Ausführung das Roboterstrukturglied und/oder die Außenschale, insbesondere wenigstens zwei miteinander verbundene oder hierzu eingerichtete Teile der Außenschale jeweils, insbesondere komplementäre, elektrische, pneumatische bzw. hydraulische Schnittstellen auf, durch die diese schalenseitigen Komponenten (elektrisch, pneumatisch bzw. hydraulisch) angebunden bzw. verbunden sein bzw. werden können bzw. die hierzu eingerichtet sind bzw. verwendet werden. In einer Ausführung ist eine solche schalenseitige Schnittstelle in die Außenschale integriert. Somit wird in einer Ausführung eine elektrische, pneumatische oder hydraulische Schnittstelle eines Teils einer Außenschale mit einer elektrischen, pneumatischen bzw. hydraulischen Schnittstelle eines anderen Teils der Außenschale verbunden und/oder eine elektrische, pneumatische oder hydraulische Schnittstelle einer Außenschale mit einer strukturgliedseitigen elektrischen, pneumatischen bzw. hydraulischen Schnittstelle verbunden bzw. weisen die Außenschale bzw. ihre Teile bzw. das Roboterstrukturglied hierzu eingerichtete bzw. verwendete Schnittstellen auf. Hierdurch kann in einer Ausführung die Montage vereinfacht und/oder die (elektrische, pneumatische bzw. hydraulische) Ver- bzw. Anbindung verbessert, insbesondere geschützt, werden.

Ein Aktuator, insbesondere des aktiven Sicherheitsmittels zum Ausfahren der Außenschale bzw. deren lokalen Bereichs oder Lösen einer Sperre einer Federeinrichtung, die die Außenschale bzw. deren lokalen Bereich vorspannt, und/oder des aktiven Thermomittels zum Öffnen bzw. Schließen von Kühlkanälen und/oder Durchgangsöffnungen an der Außenschale und/oder Ausfahren einer Außenschalenfläche, weist in einer Ausführung ein Element aus Formgedächtnismaterial auf, das elektrisch bzw. thermisch gesteuert bzw. verstellt wird bzw. hierzu eingerichtet ist bzw. verwendet wird. Hierdurch kann in einer Ausführung ein besonders kompakter und/oder thermoadaptiver bzw. selbstregelnder Aktuator realisiert werden.

In einer Ausführung weist ein Aktuator, insbesondere zum Verstellen wenigstens eines Teils einer das Roboterstrukturglied wenigstens teilweise abdeckenden strukturgliedfesten Außenschale, einen elektrischen, insbesondere elektromagnetischen und/oder -motorischen, hydraulischen und/oder pneumatischen Antrieb auf. Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen.

Ein Aspekt der Erfindung betrifft ein Verfahren zum Betreiben des Robotersystems bzw. der Roboteranordnungen bzw. des Roboters, umfassend den Schritt zumindest bereichsweises Abdecken zumindest eines Roboterstrukturgliedes mit der ersten und/oder wenigstens einen weiteren Außenschale. Dadurch kann das Robotersystem vorteilhafterweise an verschiedene Anforderungen konfiguriert werden. Mit anderen Worten kann das Konfigurieren des Robotersystems mittels des Anordnens einer oder mehrerer Außenschalen an ein zugeordnetes Roboterstrukturglied erfolgen.

Vorzugsweise weist das Verfahren den Schritt des Erfassens, insbesondere des Identifizierens, der angeordneten Außenschale auf. Vorteilhafterweise können dadurch in einfacher Weise Funktionen bzw. Betriebsmodi freigeschaltet werden ohne zusätzliche Konfigurationsarbeiten an einer Steuerung des Robotersystems durchzuführen. Insbesondere kann durch ein Austauschen der Außenschale(n) zwischen zwei Betriebsmodi umgeschaltet werden.

Weitere Vorteile und Merkmale ergeben sich aus den Unteransprüchen und den Ausführungsbeispielen. Hierzu zeigt, teilweise schematisiert:
- Fig. 1:: ein Robotersystem bzw. Verfahren nach einer Ausführung der vorliegenden Erfindung;
- Fig. 2:: ein Roboterstrukturglied und eine erste strukturgliedfeste Außenschale des Robotersystems;
- Fig. 3:: das Roboterstrukturglied und eine weitere strukturgliedfeste Außenschale des Robotersystems;
- Fig. 4: einen Aktuator zum Verstellen eines Teils der weiteren Außenschale; und
- Fig. 5:: ein Verfahren nach einer Ausführung der vorliegenden Erfindung.

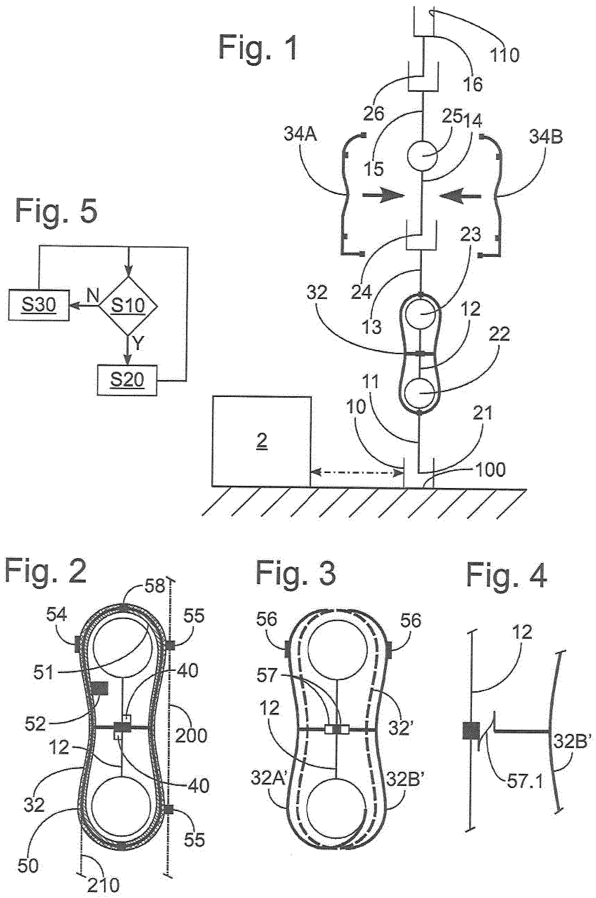

Fig. 1 zeigt ein Robotersystem bzw. Verfahren nach einer Ausführung der vorliegenden Erfindung.

Das Robotersystem weist einen Roboter mit einem Roboterstrukturglied in Form einer Basis, die ein proximales Robotergelenk 21 und eine benachbarte Roboterbefestigungsfläche 100 tragend miteinander verbindet, mehreren Roboterstrukturglieder 11 - 15, die jeweils zwei benachbarte Gelenke 21-22, 22-23, 23-24, 24-25 bzw. 25-26 tragend miteinander verbinden, sowie einem Roboterstrukturglied in Form eines Robotergreifers 16, der ein distales Robotergelenk 26 und eine benachbarte Roboterarbeitsfläche 110 tragend miteinander verbindet, und eine Robotersteuerung 2 auf.

An einem oder mehreren der Roboterstrukturglieder 10-16 werden bzw. sind jeweils mehrteilige erste Außenschalen befestigt, die die jeweiligen Roboterstrukturglieder abdecken.

Exemplarisch ist in Fig. 1 eine erste Außenschale 32 bereits an dem Roboterstrukturglied 12 befestigt, während eine erste Außenschale 34A, 34B gerade an dem Roboterstrukturglied 14 befestigt wird.

Dabei werden, wie in Fig. 1 durch Montagepfeile angedeutet, zwei Außenschalenteile 34A, 34B zerstörungsfrei lösbar an mechanischen Schnittstellen miteinander verbunden, die in den Figuren durch schwarze Rechtecke angedeutet sind.

Mechanische Schnittstellen der Außenschalen(teile), die in den Figuren ebenfalls durch schwarze Rechtecke angedeutet sind, sind bzw. werden ihrerseits zerstörungsfrei lösbar an dem jeweiligen Roboterstrukturglied befestigt, wobei diese mechanischen Schnittstellen jeweils zusätzlich elektrische, pneumatische und/oder hydraulische Schnittstellen aufweisen bzw. sein können.

Fig. 2 zeigt das Roboterstrukturglied 12 und die erste Außenschale 32 in vergrößerter Darstellung.

An dem Roboterstrukturglied 12 sind Sensoren 40 angeordnet, die die aktuell an dem Roboterstrukturglied befestigte Außenschale identifizieren und dies an die Robotersteuerung 2 melden, die daraufhin in einen Betriebsmodus umschaltet, der für die identifizierte(n) Außenschale(n) zugelassen ist.

Beispielsweise prüft die Robotersteuerung 2 in einer Ausführung in einem Schritt S10 (vgl. Fig. 5), ob an allen beweglichen Roboterstrukturgliedern 11-16 jeweils eine Außenschale mit einem nachfolgend erläuterten Sicherheitsmittel angeordnet bzw. erfasst ist. Ist dies der Fall (S10: "Y"), wird in einen Mensch-Roboter-Kooperations-Betrieb oder einen Betriebsmodus mit höheren zulässigen Geschwindigkeiten des Roboters umgeschaltet (S20), andernfalls (S10: "N") in einen Automatik-Betrieb oder einen Betriebsmodus mit niedrigeren zulässigen Geschwindigkeiten des Roboters (S30). In einer Abwandlung kann auch geprüft werden, ob überhaupt an jedem hierfür vorgesehenen Roboterstrukturglied bzw. dessen Schnittstelle(n) (irgend)eine (zugelassene) Außenschale angeordnet ist, beispielsweise mithilfe einer Erfassung von Kodierstiften oder dergleichen, und nur in diesem Fall (S10: "Y") ein (Fahr)Betrieb des Roboters freigegeben werden (S20), andernfalls eine entsprechende Meldung ausgegeben werden (S30).

Die erste Außenschale 32 weist exemplarisch ein passives Sicherheitsmittel zur Reduzierung einer Kollisionsbelastung in Form einer energieabsorbierenden, elastischen Außenschicht 50 und ein passives Thermomittel zur thermischen Isolation eines strukturgliedseitigen Innenraums in Form einer Isolationsschicht 51 auf und dichtet zudem den Innenraum ab.

Zudem weist die erste Außenschale 32 exemplarisch ein aktives Thermomittel 52 zur Temperierung des strukturgliedseitigen Innenraums in Form eines Lüfters, Wärmetauschers oder dergleichen auf, das in Fig. 2 schematisiert angedeutet ist.

Des Weiteren weist die erste Außenschale 32 exemplarisch ein Ein- und/oder Ausgabemittel 54 in Form eines Touchscreens, RGB-Leds oder dergleichen auf, das in Fig. 2 ebenfalls schematisiert angedeutet ist.

Außerdem weist die erste Außenschale 32 exemplarisch Schnittstellen 55 auf, an denen eine Energie- oder Fluidleitung 200 befestig ist bzw. wird.

Außerdem weist die erste Außenschale 32 exemplarisch eine integrierte Energie- oder Fluidleitung 210 auf.

Des Weiteren weist die erste Außenschale 32, die wie die erste Außenschale 34A, 34B zweitteilig ist, exemplarisch an den mechanischen Verbindungsschnittstellen der beiden Außenschalenteile Siegel 58 auf, die beim Öffnen der Außenschale 32 bzw. Lösen der beiden Außenschalenteile voneinander zerstört werden. Die erste Außenschale 32 der Fig. 1, 2 kann wahlweise gegen eine weitere Außenschale 32' ausgetauscht werden, die in Fig. 3 dargestellt ist. Diese weitere Außenschale 32' weist Sensoren 56 in Form von Kameras, Ultraschallsensoren oder dergleichen zur Umgebungserfassung auf.

Zudem sind an der weitere Außenschale 32' Aktuatoren 57 zum Verstellen der beiden Außenschalenteile 32A', 32B' aus einer geschlossenen Stellung, die in Fig. 3 gestrichelt angedeutet ist, in eine geöffnete Stellung vorgesehen, die in Fig. 3 ausgezogen dargestellt ist. Hierdurch können Kühlspalte zur Kühlung des strukturgliedseitigen Innenraums erzeugt bzw. geöffnet werden. Zusätzlich oder alternativ kann durch die in Fig. 4 angedeutete Verstellung in die geöffnete Stellung proaktiv eine Kontaktfläche verstellt werden, um eine Kollisionsbelastung zu reduzieren, wenn mithilfe der Sensoren 56 eine Kollision prognostiziert oder erfasst wird. In einer Ausführung werden die Außenschalenteile 32A', 32B' auch in die geöffnete Stellung verstellt, falls ein Sensor an einer Außenschale eines anderen der Roboterstrukturglieder 10, 11, 13-16 eine Kollision prognostiziert.

Dies kann gleichermaßen an Fig. 5 veranschaulicht werden, in der dann bzw. hierzu Schritt S10 die Prognose bzw. Erfassung einer (bevorstehenden) Kollision und/oder eines Kühlbedarfs und S20 eine entsprechende Verstellung bzw. Öffnung der Außenschalenteile 32A', 32B' bzw. Schritt S20 eine entsprechende Rück- bzw. Nicht-Verstellung bzw. Schließung darstellt.

Fig. 4 zeigt exemplarisch den Aktuator zum Verstellen des Außenschalenteils 32B' mit einem Element 57.1 aus Formgedächtnismaterial, das sich infolge einer Erwärmung des Innenraums ausdehnt und dadurch das Außenschalenteil 32B' öffnet und zusätzlich zur weiteren Öffnung bestromt werden kann.

In einer Abwandlung kann das Element 57.1 in Fig. 4 auch eine Blattfeder sein, die den Außenschalenteil 32B' öffnet, sobald eine Sperre gelöst wird bzw. ist. Obwohl in der vorhergehenden Beschreibung exemplarische Ausführungen erläutert wurden, sei darauf hingewiesen, dass eine Vielzahl von Abwandlungen möglich ist.

So weist insbesondere die erste Außenschale 32 zur kompakteren Darstellung diverse Mittel 50 - 55 und die integrierte Leitung 210 auf, wobei in einer Abwandlung eines oder mehrere dieser Mittel und/oder diese integrierte Leitung entfallen und/oder analog zu Fig. 4 weitere Außenschalen vorgesehen sein können, die alternativ an Stelle der ersten Außenschale 32 oder weiteren Außenschale 32' an dem Roboterstrukturglied 12 befestigt werden und eines oder mehrere dieser Mittel und/oder diese integrierte Leitung aufweisen bzw. andere Funktion(alität)en zur Verfügung stellen können. Zusätzlich oder alternativ kann die Außen- und/oder Innenschicht 50, 51 auch eine elektrische Abschirmung aufweisen.

Zusätzlich oder alternativ kann die Außenschicht 50 auch eine passive drucksensitive Folie aufweisen, die bei über den vorgesehenen bzw. Normalbetrieb hinausgehenden Kontaktkräften bleibende Veränderungen, insbesondere Verfärbungen oder dergleichen, annimmt und so einen Fehlgebrauch indiziert.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

So umgreifen die Außenschalen 32, 32', (34A+34B) in den Figuren die jeweiligen Roboterstrukturglieder sowie diese verbindenden Gelenke jeweils wenigstens teilweise. Dies ist, wie bereits erwähnt, nur schematisch, in Abwandlungen können Außenschalen insbesondere auch ein oder beide Gelenke freilassen bzw. nur das Roboterstrukturglieder selber (wenigstens teilweise) abdecken.

### Bezugszeichenliste

- 2: Robotersteuerung
- 10 - 16: Roboterstrukturglied
- 21 - 26: Robotergelenk
- 32: erste Außenschale
- 32': weitere Außenschale
- 32A', 32B': Außenschalenteile
- 34A, 34B: Außenschalenteile
- 40: Erkennungs-/Identifikationssensor
- 50: Außenschicht
- 51: Innenschicht/Isolationsschicht
- 52: aktives Thermomittel
- 54: Ein-/Ausgabemittel
- 55: Schnittstelle zur Befestigung einer Zusatzkomponente
- 56: Sensor
- 57: Aktuator
- 57.1: Element aus Formgedächtnismaterial/Blattfeder
- 58: Siegel
- 100, 110: Roboterbefestigungs-/-arbeitsfläche
- 200; 210: Leitung

## Patentansprüche

1. Robotersystem mit wenigstens einem Roboterstrukturglied (10-16),
welches ein Robotergelenk (21-26) und ein benachbartes Robotergelenk (21-26) oder
welches ein Robotergelenk (21-26) und ein benachbarte Roboterbefestigungsfläche oder Roboterarbeitsfläche (100, 110) tragend miteinander verbindet,
wobei das Roboterstrukturglied (10-16) und/oder das Robotergelenk (21-26) von einer am Roboterstrukturglied (10-16) und/oder am Robotergelenk (21-26) angeordneten ersten strukturgliedfesten Außenschale (32; 34A, 34B) wenigstens teilweise abgedeckt ist
**gekennzeichnet durch** zumindest ein Siegel (58), das durch Entfernen der Außenschale beschädigt wird.

2. Robotersystem nach Anspruch 1, mit wenigstens einer weiteren Außenschale (32A'; 32B'), insbesondere mit von der ersten Außenschale wenigstens teilweise verschiedener Geometrie, Oberfläche, Teilezahl und/oder Funktionalität und/oder wenigstens teilweise aus von der ersten Außenschale verschiedenem Werkstoff, zur wenigstens teilweisen Abdeckung des Roboterstrukturglieds (10-16) und/oder Robotergelenks (21-26) anstelle der oder zusammen mit der ersten Außenschale (32; 34A, 34B).

3. Robotersystem nach einem der vorhergehenden Ansprüche, mit Mitteln (2; 40) zum Erfassen, insbesondere Identifizieren, wenigstens einer Außenschale, die das Roboterstrukturglied aktuell wenigstens teilweise abdeckt, wobei vorzugsweise in Abhängigkeit von der erfassten und/oder identifizieren Außenschale ein Freigeben eines Betriebsmodus und/oder ein Umschalten zwischen verschiedenen Betriebsmodi erfolgt.

4. Robotersystem nach einem der vorhergehenden Ansprüche, mit wenigstens einem strukturgliedfesten oder außenschalenfesten Aktuator (57) zum Verstellen wenigstens eines Teils einer das Roboterstrukturglied wenigstens teilweise abdeckenden strukturgliedfesten Außenschale.

5. Robotersystem nach einem der vorhergehenden Ansprüche, wobei die erste und/oder wenigstens eine weitere Außenschale wenigstens zwei Außenschalenteile (32A'; 32B'; 34A, 34B) aufweist, die zerstörungsfrei lösbar miteinander verbunden sind.

6. Robotersystem nach einem der vorhergehenden Ansprüche, wobei die erste und/oder wenigstens eine weitere Außenschale wenigstens ein aktives und/oder wenigstens ein passives Sicherheitsmittel (50; 57) zur Reduzierung einer Kollisionsbelastung aufweist.

7. Robotersystem nach einem der vorhergehenden Ansprüche, wobei die erste und/oder wenigstens eine weitere Außenschale wenigstens ein Schutzmittel (50, 51) zur Abschirmung und/oder Abdichtung eines strukturgliedseitigen Innenraums aufweist und/oder den strukturgliedseitigen Innenraum abdichtet.

8. Robotersystem nach einem der vorhergehenden Ansprüche, wobei die erste und/oder wenigstens eine weitere Außenschale wenigstens ein aktives und/oder wenigstens ein passives Thermomittel (51, 52) zur Temperierung und/oder thermischen Isolation eines strukturgliedseitigen Innenraums aufweist.

9. Robotersystem nach einem der vorhergehenden Ansprüche, wobei die erste und/oder wenigstens eine weitere Außenschale wenigstens eine Schnittstelle (55) zur Befestigung wenigstens einer Zusatzkomponente (200) und/oder wenigstens eine elektrische, pneumatische und/oder hydraulische Schnittstelle aufweist.

10. Robotersystem nach einem der vorhergehenden Ansprüche, wobei die erste und/oder wenigstens eine weitere Außenschale wenigstens eine elektrische und/oder wenigstens eine Fluidleitung (200, 210) aufweist.

11. Robotersystem nach einem der vorhergehenden Ansprüche, wobei die erste und/oder wenigstens eine weitere Außenschale wenigstens ein Eingabemittel und/oder Ausgabemittel (54) zum Eingeben bzw. Ausgeben von Informationen aufweist.

12. Robotersystem nach einem der vorhergehenden Ansprüche, wobei die erste und/oder wenigstens eine weitere Außenschale wenigstens einen Sensor (56) zur Umgebungserfassung aufweist.

13. Robotersystem nach einem der vorhergehenden Ansprüche, **dadurch gekennzeichnet, dass** die erste und/oder wenigstens eine weitere Außenschale wenigstens einen Fehlgebrauchsindikator (50) aufweist.

14. Verfahren zum Betreiben eines Robotersystems nach einem der vorhergehenden Ansprüche, wobei das Roboterstrukturglied, insbesondere alternativ oder gemeinsam, mit der ersten und/oder wenigstens einen weiteren Außenschale wenigstens teilweise abgedeckt wird, wobei das Konfigurieren des Robotersystems vorzugsweise mittels des Anordnens einer oder mehrerer Außenschalen an ein zugeordnetes Roboterstrukturglied erfolgt.

15. Verfahren nach Anspruch 14, wobei das Verfahren einen oder mehrere der folgenden Schritte umfasst:
- Erfassen, insbesondere Identifizieren, wenigstens einer Außenschale, die ein zugeordnetes Roboterstrukturglied aktuell wenigstens teilweise abdeckt;
- Freigeben eines Betriebsmodus und/oder Umschalten zwischen zwei Betriebsmodi in Abhängigkeit von der erfassten bzw. identifizierten Außenschale;
- Aktivieren von wenigstens einem außenschalenseitigen Sicherheitsmittel zur Reduzierung einer Kollisionsbelastung, falls eine Kollision prognostiziert und/oder erfasst wird;
- Abdichten eines strukturgliedseitigen Innenraums;
- Temperieren des strukturgliedseitigen Innenraums mit Hilfe wenigstens eines außenschalenseitigen Thermomittels;
- Verstellen wenigstens eines Teils einer das Roboterstrukturglied wenigstens teilweise abdeckenden strukturgliedfesten Außenschale mithilfe wenigstens eines strukturgliedfesten oder außenschalenfesten Aktuators;
- Eingeben und/oder Ausgeben von Informationen mithilfe eines außenschalenseitigen Eingabemittels und/oder Ausgabemittels;
- Erfassen einer Umgebung mithilfe wenigstens eines außenschalenseitigen Sensors;
- Feststellen eines Missbrauchs oder Fehlgebrauchs mit Hilfe wenigstens eines außenschalenseitigen Siegels oder Fehlgebrauchsindikators.

## Claims

1. Robot system comprising at least one robot structure element (10-16)
which connects a robot joint (21-26) and a neighbouring robot joint (21-26) or
which connects a robot joint (21-26) and a neighbouring robot securing surface or robot working surface (100, 110) to one another in a bearing manner,
wherein the robot structure element (10-16) and/or the robot joint (21-26) is at least partially covered by a first outer shell (32; 34A, 34B) which is fixed to the structure element and arranged on the robot structure element (10-16) and/or on the robot joint (21-26),
**characterized by** at least one seal (58) which is damaged by removal of the outer shell.

2. Robot system according to Claim 1, comprising at least one further outer shell (32A'; 32B'), in particular with a different geometry, surface, number of parts and/or functionality from the first outer shell and/or at least partially different material from the first outer shell, for at least partially covering the robot structure element (10-16) and/or robot joint (21, 26) instead of or together with the first outer shell (32; 34A, 34B).

3. Robot system according to one of the preceding claims, comprising means (2; 40) for sensing, in particular identifying, at least one outer shell which is currently at least partially covering the robot structure element, wherein enabling of an operating mode and/or switching over between different operating modes preferably takes place in dependence on the sensed and/or identified outer shell.

4. Robot system according to one of the preceding claims, comprising at least one actuator (57), which is fixed to the structure element or fixed to the outer shell, for adjusting at least part of an outer shell which is fixed to the structure element and at least partially covers the robot structure element.

5. Robot system according to one of the preceding claims, wherein the first and/or at least one further outer shell has at least two outer shell parts (32A'; 32B'; 34A, 34B), which are non-destructively releasably connected to one another.

6. Robot system according to one of the preceding claims, wherein the first and/or at least one further outer shell has at least one active and/or at least one passive safety means (50; 57) for reducing collision loading.

7. Robot system according to one of the preceding claims, wherein the first and/or at least one further outer shell has at least one protective means (50, 51) for screening off and/or sealing off an interior space on the structure element side and/or seals off the interior space on the structure element side.

8. Robot system according to one of the preceding claims, wherein the first and/or at least one further outer shell has at least one active and/or at least one passive thermal means (51, 52) for controlling the temperature and/or thermally insulating an interior space on the structure element side.

9. Robot system according to one of the preceding claims, wherein the first and/or at least one further outer shell has at least one interface (55) for securing at least one additional component (200) and/or has at least one electrical, pneumatic and/or hydraulic interface.

10. Robot system according to one of the preceding claims, wherein the first and/or at least one further outer shell has at least one electrical and/or at least one fluid line (200, 210).

11. Robot system according to one of the preceding claims, wherein the first and/or at least one further outer shell has at least one input means and/or output means (54) for inputting or outputting information.

12. Robot system according to one of the preceding claims, wherein the first and/or at least one further outer shell has at least one sensor (56) for sensing the surroundings.

13. Robot system according to one of the preceding claims, **characterized in that** the first and/or at least one further outer shell has at least one improper-use indicator (50).

14. Method for operating a robot system according to one of the preceding claims, wherein the robot structure element is at least partially covered, in particular alternatively or jointly, by the first and/or at least one further outer shell, wherein the configuring of the robot system preferably takes place by means of arranging one or more outer shells on an assigned robot structure element.

15. Method according to Claim 14, wherein the method comprises one or more of the following steps:
- sensing, in particular identifying, at least one outer shell which is currently at least partially covering an assigned robot structure element;
- enabling an operating mode and/or switching over between two operating modes in dependence on the sensed or identified outer shell;
- activating at least one safety means on the outer shell side for reducing collision loading if a collision is predicted and/or sensed;
- sealing off an interior space on the structure element side;
- controlling the temperature of the interior space on the structure element side with the aid of at least one thermal means on the outer shell side;
- adjusting with the aid of at least one actuator which is fixed to the structure element or fixed to the outer shell at least part of an outer shell which is fixed to the structure element and is at least partially covering the robot structure element;
- inputting and/or outputting information with the aid of an input means and/or output means on the outer shell side;
- sensing surroundings with the aid of at least one sensor on the outer shell side;
- determining misuse or improper use with the aid of at least one seal or improper-use indicator on the outer shell side.

## Revendications

1. Système robotisé comprenant au moins un élément structural de robot (10-16),
lequel relie entre elles de manière portante une articulation de robot (21-26) et une articulation de robot adjacente (21-26) ou lequel relie entre elles de manière portante une articulation de robot (21-26) et une surface de fixation de robot ou une surface de travail de robot adjacente (100, 110),
l'élément structural de robot (10-16) et/ou l'articulation du robot (21-26) étant au moins partiellement recouvert par une première coque extérieure (32 ; 34A, 34B) solidaire de l'élément structural, disposée au niveau de l'élément structural de robot (10-16) et/ou au niveau de l'articulation de robot (21-26) **caractérisé par** au moins un sceau (58) qui est endommagé par le retrait de la coque extérieure.

2. Système robotisé selon la revendication 1, comprenant au moins une coque extérieure supplémentaire (32A' ; 32B'), en particulier avec une géométrie, une surface, un nombre de pièces et/ou une fonctionnalité au moins partiellement différents de ceux de la première coque extérieure et/ou au moins partiellement constituée d'un matériau différent de celui de la première coque extérieure, pour recouvrir au moins partiellement l'élément structural de robot (10-16) et/ou l'articulation de robot (21-26) à la place de la première coque extérieure (32 ; 34A, 34B) ou conjointement avec celle-ci.

3. Système robotisé selon l'une des revendications précédentes, comprenant des moyens (2 ; 40) destiné à détecter, notamment à identifier, au moins une coque extérieure qui recouvre actuellement au moins partiellement l'élément structural de robot, une validation d'un mode de fonctionnement et/ou une permutation entre différents modes de fonctionnement s'effectuant de préférence en fonction de la coque extérieure détectée et/ou identifiée.

4. Système robotisé selon l'une des revendications précédentes, comprenant au moins un actionneur (57) solidaire de l'élément structurel ou solidaire de la coque extérieure destiné à positionner au moins une partie d'une coque extérieure solidaire de l'élément structural qui recouvre au moins partiellement l'élément structural de robot.

5. Système robotisé selon l'une des revendications précédentes, la première et/ou au moins une coque extérieure supplémentaire possédant au moins deux parties de coque extérieure (32A' ; 32B' ; 34A, 34B) qui sont reliées entre elles de manière amovible et non destructive.

6. Système robotisé selon l'une des revendications précédentes, la première et/ou au moins une coque extérieure supplémentaire possédant au moins un moyen de sécurité actif et/ou au moins un moyen de sécurité passif (50 ; 57) servant à réduire une charge de collision.

7. Système robotisé selon l'une des revendications précédentes, la première et/ou au moins une coque extérieure supplémentaire possédant au moins un moyen de protection (50, 51) destiné à protéger et/ou étanchéifier un espace intérieur côté élément structural et/ou rendant étanche l'espace intérieur côté élément structural.

8. Système robotisé selon l'une des revendications précédentes, la première et/ou au moins une coque extérieure supplémentaire possédant au moins un moyen thermique actif et/ou au moins un moyen thermique passif (51, 52) servant à la régulation de la température et/ou à l'isolation thermique d'un espace intérieur côté élément structural.

9. Système robotisé selon l'une des revendications précédentes, la première et/ou au moins une coque extérieure supplémentaire possédant au moins une interface (55) servant à la fixation d'au moins un composant supplémentaire (200) et/ou au moins une interface électrique, pneumatique et/ou hydraulique.

10. Système robotisé selon l'une des revendications précédentes, la première et/ou au moins une coque extérieure supplémentaire possédant au moins une ligne électrique et/ou au moins une conduite de fluide (200, 210).

11. Système robotisé selon l'une des revendications précédentes, la première et/ou au moins une coque extérieure supplémentaire possédant au moins un moyen de saisie et/ou un moyen d'émission (54) destiné à la saisie ou l'émission d'informations.

12. Système robotisé selon l'une des revendications précédentes, la première et/ou au moins une coque extérieure supplémentaire possédant au moins un capteur (56) destiné à la détection d'environnement.

13. Système robotisé selon l'une des revendications précédentes, **caractérisé en ce que** la première et/ou au moins une coque extérieure supplémentaire possède au moins un indicateur d'utilisation incorrecte (50).

14. Procédé pour faire fonctionner un système robotisé selon l'une des revendications précédentes, l'élément structural de robot étant recouvert, en particulier en alternative ou conjointement, au moins partiellement par la première coque extérieure et/ou au moins une coque extérieure supplémentaire, la configuration du système robotisé s'effectuant de préférence au moyen de la disposition d'une ou plusieurs coques extérieures sur un élément structural de robot associé.

15. Procédé selon la revendication 14, le procédé comprenant une ou plusieurs des étapes suivantes :
- détection, notamment identification, d'au moins une coque extérieure qui recouvre actuellement au moins partiellement un élément structural de robot associé ;
- validation d'un mode de fonctionnement et/ou permutation entre deux modes de fonctionnement en fonction de la coque extérieure détectée ou identifiée ;
- activation d'au moins un dispositif de sécurité situé sur la coque extérieure afin de réduire une charge de collision dans le cas où une collision est prévue et/ou détectée ;
- étanchéification d'un espace intérieur côté élément structural ;
- régulation de la température de l'espace intérieur côté élément structural à l'aide d'au moins un moyen thermique côté coque extérieure ;
- positionnement d'au moins une partie d'une coque extérieure solidaire de l'élément structural qui recouvre au moins partiellement l'élément structural de robot à l'aide d'au moins un actionneur solidaire de l'élément structural ou solidaire de la coque extérieure ;
- saisie et/ou émission d'informations à l'aide d'un moyen de saisie et/ou d'un moyen d'émission côté coque extérieure ;
- détection d'un environnement à l'aide d'au moins un capteur côté coque extérieure ;
- constatation d'une utilisation abusive ou incorrecte à l'aide d'au moins un sceau ou indicateur d'utilisation incorrecte côté coque extérieure.
